# FASCICULE DE BREVET EUROPEEN

(11) **EP 1 806 110 B1**
(45) Date de publication et mention de la délivrance du brevet: **09.11.2011**
(21) Numéro de dépôt: 07354001.5
(22) Date de dépôt: 05.01.2007
(51) Int. Cl.: A61C 13/30

(54) **Tenon d'ancrage dentaire extractible**
Herausziehbarer dentaler Verankerungszapfen
Removable dental anchoring tenon

(30) Priorité: 05.01.2006 FR 0600085
(43) Date de publication de la demande: 11.07.2007
(73) Titulaire: Maneuf, Bernard, 38500 Voiron (FR); Clunet-Coste, Bruno, F-38960 Saint-Etienne-de-Crossey (FR); Collombin, André, 38500 Voiron (FR)
(72) Inventeur: Le Guay, Yannick, 38140 Renage (FR); Clunet-Coste, Bruno, 38960 Saint Etienne de Crossey (FR)
(74) Mandataire: Hecké, Gérard

(56) Documents cités:
- FR-A1- 2 753 365
- US-A- 5 871 359
- US-A- 5 890 904
- US-A1- 2005 123 881

## Description

### Domaine technique de l'invention

L'invention concerne un tenon d'ancrage canalaire, plus particulièrement destiné à retenir les obturations coronaires respectant les particularités anatomiques et physiologiques du canal radiculaire. Le tenon est radio opaque dans une zone centrale s'étendant suivant l'axe longitudinal du tenon et en matériau composite comportant au moins une matrice organique, des particules et des fibres.

### État de la technique

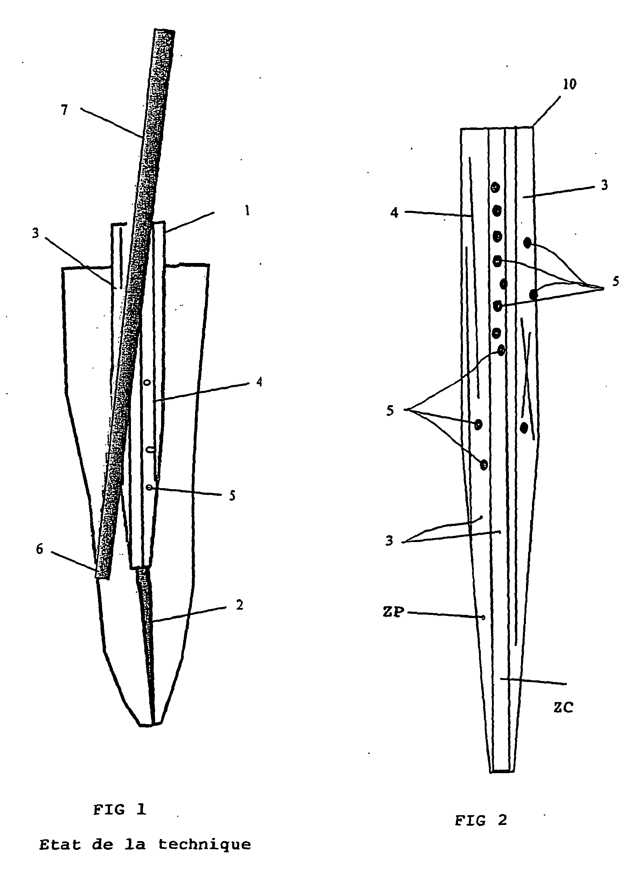

En référence à la figure 1 relative à la reconstruction d'une partie coronaire de la dent, un tenon 1 est généralement introduit et scellé dans le canal radiculaire 2 après mise en forme pour servir d'ancrage à une reconstitution coronaire. Les tenons peuvent être en matériau métallique ou en matériau composite.

Les tenons en matériau composite sont constitués d'une matrice organique 3 liant entre elles des fibres 4 qui apportent au tenon ses caractéristiques de résistance mécanique, et éventuellement des particules organiques ou minérales 5 apportant d'autres caractéristiques, par exemple une teinte déterminée, une opacité aux rayons X, ou encore de la translucidité pour permettre la polymérisation de colles photo sensibles.

Le document FR 2 588 181 décrit précisément la possibilité de coller les tenons au moyen de colles photo sensibles, ce qui implique la translucidité de tels tenons.

En cas d'une infection apicale ou d'un défaut prothétique nécessitant le démontage d'un tenon en matériau composite, le chirurgien dentiste doit éliminer le tenon existant solidement collé dans la racine par meulage ou fraisage avec un risque important de création d'un faux canal 6.

S. SAKHAL décrit une méthode consistant à faire pénétrer dans le tenon sans irrigation un foret 7 tournant à 15000 t/m . Il ne se passe rien pendant quelques secondes, puis la matrice organique s'échauffe et se déforme par fluage. On a constaté que les fibres ne permettent pas un guidage précis du foret, et le risque de perforation reste très important, comme indiqué schématiquement à la figure 1.

Le document FR 2 588 181 décrit un tenon possédant une âme centrale creuse.

Le document FR 2 626 167 se rapporte à un tenon possédant une âme centrale métallique ou constituée de fibres enrobées de résine synthétique.

Lorsque cette âme n'est pas métallique, elle est constituée d'une fibre ou de plusieurs fibres non radio opaques, et la gaine externe peut être rendue opaque aux rayons X au moyen de particules radio opaques.

Le document FR 2 731 147 mentionne un tenon équipé d'une âme centrale en matériau composite, laquelle comporte au moins un réseau de fibres non radio opaques, et une gaine externe radio opaque renforcée avec des fibres opaques aux rayons X.

Le document FR 2 726 999 décrit un tenon possédant une âme centrale facilement pénétrable et transparent pour servir de guide de lumière, mais étant constituée d'un matériau différent du reste du tenon.

Le document US 5 326 263 est relatif à un outil entièrement en matériau plastique translucide permettant de polymériser en profondeur des résines photo sensibles dans le canal dentaire. Cet outil peut être avantageusement équipé d'une fibre optique centrale amovible.

Dans le document US-A-2005/123881, un tenon selon un mode particulier de réalisation comporte une partie centrale de forme cylindrique, en matériau composite renforcé par des fibres et une partie périphérique annulaire coaxiale à la partie centrale, en matériau composite renforcé par des fibres et/ou des charges. L'une des deux parties est radio opaque tandis que l'autre est transparente ou translucide. La partie centrale peut, ainsi, être radio opaque tandis que la partie périphérique est transparente ou translucide.

L'incorporation dans le tenon d'une âme centrale, réalisée en un matériau chimiquement et mécaniquement différent, crée au niveau de l'interface où se concentrent les contraintes mécaniques, une zone fragile entre des matériaux de différentes natures. Il en résulte l'apparition de tensions interfaciales et d'amorces de ruptures suite à l'incompatibilité des matériaux en présence, avec risque d'infiltration le long de l'interface. De plus, le centrage d'une telle âme au centre d'un tenon est aléatoire et peu reproductif industriellement.

### Objet de l'invention

L'invention a pour but un tenon d'ancrage canalaire, radio opaque dans une zone centrale s'étendant suivant l'axe longitudinal du tenon, en matériau composite comportant au moins une matrice organique, des particules et des fibres et ne présentant pas les inconvénients décrits précédemment.

Selon l'invention, ce but est atteint par les revendications annexées. Plus particulièrement, ce but est atteint par le fait que la proportion volumique en particules est supérieure à la proportion volumique en fibres dans ladite zone centrale et en ce que la proportion volumique en particules dans ladite zone centrale est inférieure à la proportion volumique en fibres dans une zone périphérique annulaire, coaxiale à ladite zone centrale et ayant une radio opacité inférieure à celle de la zone centrale.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- La figure 1 est une vue schématique d'une phase préalable de reconstruction de la partie coronaire d'une dent, avant l'extraction d'un tenon existant de l'art antérieur.
- La figure 2 représente un mode particulier de réalisation d'un tenon préfabriqué extractible selon l'invention.
- La figure 3 montre une vue en coupe transversale de tenon de la figure 2.
- La figure 4 représente l'évolution des proportions volumiques respectives des particules et des fibres dans un autre mode particulier de réalisation d'un tenon selon l'invention.
- La figure 5 représente un autre mode particulier de répartition de deux types de particules et de deux types de fibres dans une matrice organique d'un tenon selon l'invention.

### Description de modes particuliers de réalisation

Selon l'invention, un tenon d'ancrage canalaire est constitué d'un seul matériau composite comportant au moins une matrice organique, des particules et des fibres de renfort. Par contre, la répartition des particules et des fibres de renfort dans ledit tenon évolue du centre dudit tenon jusqu'à la périphérie du tenon.

L'évolution de la répartition des fibres et des particules dans le tenon permet, ainsi, de délimiter une zone centrale suivant l'axe longitudinal dudit tenon et une zone périphérie, annulaire, coaxiale à ladite zone centrale. De plus, la limite entre la zone centrale et la zone périphérique est définie par les caractéristiques techniques suivantes :
- dans la zone centrale, la proportion volumique en particules est supérieure à la proportion volumique en fibres,
- dans la zone périphérique, la proportion volumique en particules est inférieure à la proportion volumique en fibres
- et la zone périphérique présente une radio opacité inférieure à celle de la zone centrale.

Par proportion volumique en particules, on entend le rapport entre le volume occupé par les particules et le volume total occupé par les particules et les fibres. De même, la proportion volumique en fibres correspond au rapport entre le volume occupé par les fibres et le volume total occupé par les particules et les fibres. Le terme proportion volumique peut également être remplacé par le terme taux volumique ou pourcentage volumique.

Ainsi, les deux zones du tenon sont constituées de la même matrice organique. Elles n'ont pas besoin d'être fabriquées séparément puis d'être assemblées. Elles peuvent être réalisées lors d'une même opération, par exemple par pultrusion. Le tenon est, alors, chimiquement homogène et dépourvu d'interfaces chimiques, ce qui supprime toute tension interfaciale et amorce de rupture, ainsi que tout risque d'infiltration.

La majorité des particules est, de préférence, formée par des particules radio opaques. Lesdites particules radio opaques sont, par exemple, choisies parmi tout type de charges comportant un métal tel que les métaux lourds ou les terres rares, plus particulièrement sous forme d'oxyde ou de fluorure. Plus particulièrement, les particules radio opaques peuvent être choisies parmi les oxydes ou fluorures d'un élément chimique ayant un numéro atomique compris entre 57 et 71 tels que l'oxyde d'ytterbium (Yb₂O₃) le fluorure d'ytterbium (YbF₃), l'oxyde de gadolinium (Gd₂O₃) et l'oxyde de dysprosium. Elles peuvent également être choisies parmi l'oxyde de baryum (Ba₂O₃), l'oxyde de tantale (Ta₂O₅), l'oxyde de zirconium (ZrO₂), l'oxyde d'yttrium (Y₂O₃) ou bien parmi les particules de verres contenant des éléments opacifiant, tels que le verre de lanthane, de zirconium, de tantale, de strontium, de tungstène ou de niobium.

De plus, le matériau composite formant le tenon peut également comporter des particules non radio opaques, notamment, lorsque d'autres propriétés sont recherchées, par exemple pour des raisons d'esthétique, de codification ou pour les besoins de la fabrication. Les particules non radio opaques sont, par exemple, choisies parmi les particules minérales ou organo-minérales ne contenant aucun élément lourd, par exemple des billes ou microbilles de verre, de silice, de la silice colloïdale ou pyrogénée, du talc, du carbonate de calcium (CaCO₃), de l'alumine (Al₂O₃) et de l'oxyde de titane (TiO₂).

Le matériau composite peut également comporter des particules colorées. Il peut, par exemple, comporter des particules de colorants organiques ou de colorants thermochromatiques, tels que les cristaux liquides thermochromatiques, les microcapsules thermochromatiques à base de colorant leuco ou « leuco-colorant » également connu sous le nom anglo-saxon de « leuco dye », de spirolactones, de fluorans, de spiropyranes ou de fulgides, en combinaison ou non avec des pigments ou colorants classiques tels que l'oxyde de titane, l'oxyde de fer, le bleu outremer ainsi que divers pigments organiques.

A titre d'exemple, la zone centrale du tenon peut comporter des particules radio opaques telles que des particules de YbF₃ tandis que la zone périphérique peut comporter des particules non radio opaques, par exemple des particules de silice nanométrique. Selon une variante, les proportions volumiques respectives des particules radio opaques et non radio opaques peuvent évoluer progressivement et radialement depuis l'axe longitudinal jusqu'à la périphérie dudit tenon, avec des variations respectives opposées. Ainsi, dans ce cas, les variations des proportions volumiques en particules radio opaques et non radio opaques sont, de préférence, respectivement décroissante et croissante depuis l'axe longitudinal jusqu'à la périphérie du tenon, permettant à la zone centrale d'avoir une radio opacité supérieure à celle de la zone périphérique.

Les fibres de renfort sont, de préférence, des fibres permettant de renforcer les propriétés mécaniques et notamment la résistance en flexion, en traction compression et au cisaillement ainsi que la dureté du matériau composite. Ainsi, préférentiellement, la zone périphérique présente une dureté supérieure à celle de la zone centrale, de sorte que ce différentiel de dureté constitue un guide de forage centré le long de l'axe longitudinal du tenon et permet un guidage de sécurité lors d'un éventuel démontage. Parmi les nombreuses fibres de renfort disponibles, la fibre de verre peut être choisie pour ses propriétés mécaniques élevées et son aptitude à conduire la lumière. De plus, le tenon peut comporter au moins deux types de fibres de renfort. La zone périphérique du tenon peut, par exemple, comporter des fibres de verre de type E tandis que la zone centrale dudit tenon peut comporter des fibres de verre de composition différente, par exemple des fibres notées de type AR, R, S2, verre ECR d'Advantex, les fibres de silice (quartz), d'alumine, de ZrO₂, de bore. Les fibres peuvent également être constituées au moins en partie par d'autres fibres minérales vitreuses et/ou par d'autres fibres organiques manufacturées telles que les fibres à base de polyamide, de polyester, d'acrylique, de polypropylène ou d'aramide.

Tout type de résine approprié au domaine des matériaux dentaires peut être utilisé, parmi lesquelles on choisira, par exemple, une résine méthacrylate de type uréthane diméthacrylate reconnue pour sa bonne bio-compatibilité. D'autres types de résine peuvent également être utilisés, notamment les résine à base de polyméthacrylate, le bisphénol A glycidil diméthacrylate, le triéthylène glycidyl méthacrylate, les résines polyester, époxy et époxy modifé.

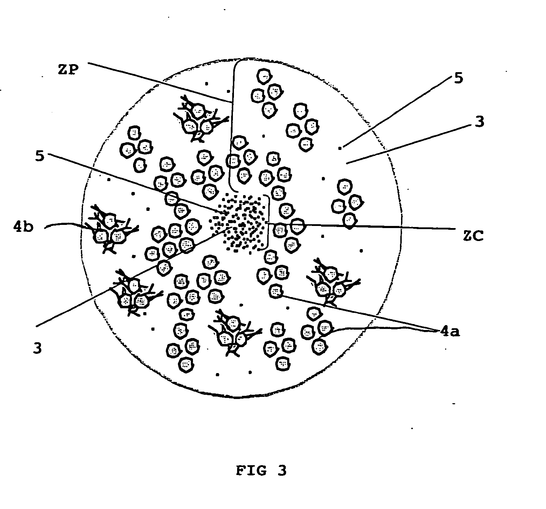

Selon un premier mode de réalisation de l'invention, représenté sur les figures 2 et 3, la proportion volumique en fibres de renfort dans la zone centrale ZC du tenon 10 peut être nulle. La zone centrale ZC est, ainsi, dépourvue de fibres et ne comporte que la matrice organique et des particules.

Ainsi, dans ce mode de réalisation, le tenon 10 possède donc une structure entièrement constituée d'une matrice organique ou résine 3, renforcée par des fibres 4 et des particules 5.

La résine de la matrice organique 3 et les particules 5 sont alors communes à tout le tenon 10. Par contre, une répartition radiale maîtrisée des fibres 4 de renfort permet l'obtention d'une zone centrale ZC dépourvue de fibres 4, et d'une zone périphérique ZP riche en fibres 4 et présentant, plus particulièrement, une proportion volumique en fibres supérieure à la proportion volumique en particules.

Les particules 5 peuvent être constituées de particules radio opaques, avec éventuellement des particules non radio opaques et elles sont, par exemple, communes à l'ensemble du tenon 10. De plus, la proportion volumique en particules radio opaques dans la zone centrale ZC est, de préférence, supérieure à celle dans la zone périphérique ZP, de sorte que la zone centrale ZC présente une radio opacité supérieure à celle de la zone périphérique ZP. La zone ZC constitue, alors, un fil traceur fortement radio opaque pour le tenon 10.

De plus, la zone périphérique ZP, fortement chargée de fibres 4 de renfort, présente, avantageusement, une dureté supérieure à celle de la zone centrale ZC dépourvue de fibres 4 de renfort. Ce différentiel de dureté constitue un guide de forage strictement centré dans le tenon 10, et permet un guidage de sécurité lors d'un éventuel démontage. En effet, l'expérimentation a montré qu'un foret introduit au début du forage au niveau supérieur du tenon 10, est aspiré automatiquement par la zone centrale ZC tendre du tenon, même sous irrigation et en cas d'alignement erroné par rapport à l'axe longitudinal du tenon. La structure tendre de la zone centrale ZC facilite l'introduction d'un foret pour éliminer le tenon existant solidement collé dans la racine et évite ainsi toute fausse trajectoire lors du mouvement de pénétration du foret. De plus, le tenon 10 selon les figures 2 et 3 possède une tenue mécanique élevée en flexion et cisaillement inter laminaire suite à l'absence d'interfaces chimiques entre la zone centrale ZC et la zone périphérique ZP.

Un tel mode de réalisation peut être mise en oeuvre au moyen d'un procédé particulier de pultrusion garantissant une distribution radiale maîtrisée des renforts. Les filaments unitaires non équi-tendus sont mêlés statistiquement entre eux en entrée de filière pour maintenir le diamètre de la zone centrale ZC constant durant tout le processus de pultrusion. Cette disposition est représentée sur la coupe de la figure 3. La zone centrale ZC est composée de résine de la matrice 3 et de particules 5, tandis que la zone périphérique ZP renferme un mélange de résine, de particules 5 avec en plus, soit des fibres unidirectionnelles 4a, soit des fibres guipées ou tissées 4b.

Selon un autre mode de réalisation, la zone centrale ZC peut comporter des fibres de renfort 4. Dans ce cas, les proportions volumiques respectives en particules 5 et en fibres 4 peuvent évoluer progressivement et radialement depuis l'axe longitudinal du tenon jusqu'à sa périphérie. Plus particulièrement, la variation volumique en particules est, de préférence, opposée à celle de la proportion volumique en fibres et la somme des proportions volumiques respectives en particules et en fibres est constante radialement depuis l'axe longitudinal jusqu'à la périphérie du tenon. La zone centrale ZC comporte alors, comme la zone périphérique ZP, des fibres de renfort 4 mais l'évolution de la proportion volumique en fibres est, de préférence, croissante depuis l'axe longitudinal jusqu'à la périphérie tandis que, pour les particules, l'évolution de leur proportion volumique est décroissante. Ainsi, la zone centrale ZC comporte avantageusement moins de fibres et plus de particules que la zone périphérique ZP.

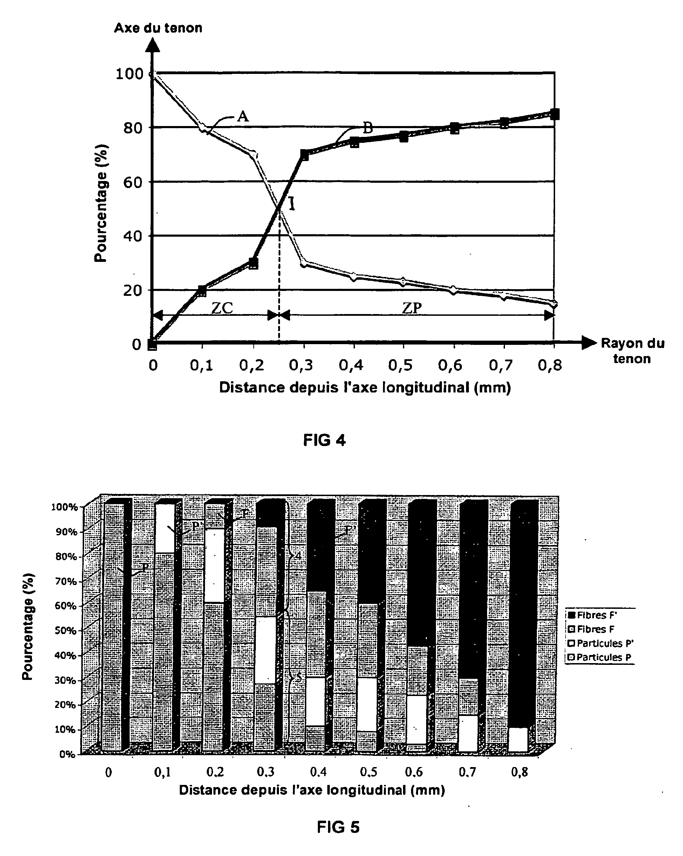

A titre d'exemple, la figure 4 représente l'évolution des proportions volumiques totales respectives des particules 5 (courbe A) et des fibres de renfort 4 (courbe B) dans un mode particulier de réalisation d'un tenon selon l'invention, depuis l'axe longitudinal dudit tenon jusqu'à sa périphérie. Au niveau de son axe longitudinal, le tenon comporte en volume 100% de particules tandis qu'à sa périphérie, il comporte en volume 85% de fibres et 15% de particules. Entre l'axe longitudinal et la périphérie, la proportion volumique totale de particules diminue graduellement tandis que la proportion volumique totale de fibres augmente graduellement. Dans un tel tenon, l'abscisse du point I, qui correspond à l'intersection entre les courbes A et B, permet de définir une interface entre la zone centrale ZC et la zone périphérique ZP. En effet, avant cette intersection l, la proportion volumique en particules est supérieure à la proportion volumique en fibres et au-delà de cette intersection I, la proportion volumique en particules est inférieure à la proportion volumique en fibres. Cependant, cette interface ne constitue pas une interface physique susceptible de créer des inhomogénéités dans le tenon, puisque la matrice organique est commune à l'ensemble du tenon et les proportions volumiques de fibres et de particules évoluent progressivement. Un tel tenon peut être fabriqué par une même opération, par exemple de pultrusion.

Avantageusement, les particules 5 peuvent être radio opaques. Dans ce cas, la radio opacité du tenon suit la même évolution que lesdites particules, depuis l'axe longitudinal jusqu'à la périphérie. Ainsi, la zone centrale ZC, qui comporte plus de particules radio opaques que la zone périphérique ZP, présente une radio opacité supérieure à celle de la zone périphérique. De même, les propriétés mécaniques et plus particulièrement la dureté peuvent également suivre la même évolution que la proportion volumique en fibres.

Selon une variante de réalisation, les particules 5 peuvent être de deux types, respectivement radio opaques et non radio opaques. Dans ce cas, la proportion volumique de particules radio opaques est, avantageusement, supérieure à la proportion volumique de particules non radio opaques dans la zone centrale ZC et inversement dans la zone périphérique ZP. De plus, l'évolution des proportions volumiques en particules respectivement radio opaques et non radio opaques peut être équivalente à celle des proportions volumiques totales des particules et des fibres, représentée sur la figure 4. Ainsi, la proportion volumique en particules radio opaques peut décroître progressivement et radialement depuis l'axe longitudinal jusqu'à la périphérie du tenon tandis que pour les particules non radio opaques, l'évolution de leur proportions volumiques peut être croissante depuis l'axe du tenon jusqu'à sa périphérie.

Le tenon peut également comporter au moins deux types de fibres, avec des évolutions progressives, radiales et opposées des proportions volumiques respectives des deux types de fibres, depuis l'axe longitudinal jusqu'à la périphérie dudit tenon.

A titre d'exemple, la figure 5 représente un mode particulier de répartition de deux types de particules P et P' et de deux types de fibres F et F' dans une matrice organique d'un tenon selon l'invention, depuis l'axe longitudinal dudit tenon jusqu'à sa périphérie. Dans ce cas particulier, le tenon comporte, au niveau de son axe longitudinal, 100% en volume de particules P, la proportion en particules P diminuant progressivement à mesure qu'on s'éloigne de l'axe longitudinal pour être nulle à environ 0,7 mm de l'axe, au profit de particules P' et de fibres F et F'. De plus, vers l'axe longitudinal du tenon et plus précisément dans une zone centrale du tenon, la proportion totale volumique en particules P et P' est supérieure à la proportion totale en fibres F et F' et inversement vers la périphérie et plus particulièrement dans une zone périphérique du tenon. Enfin, la proportion volumique en fibres F' augmente progressivement depuis l'axe longitudinal jusqu'à la périphérie du tenon. Une telle répartition radiale des particules et des fibres peut être obtenue par pultrusion.

Le tenon selon l'invention peut avoir une forme quelconque, par exemple cylindrique, conique ou cylindro-conique, et présente dans ces derniers cas un module d'élasticité décroissant de la partie coronaire jusqu'à l'apex. A titre d'exemple, la zone périphérique ZP du tenon 10 représenté sur les figures 2 et 3, possède un module axial élevé (typiquement 30 à 60 GPa) pour un taux volumique de fibres de verre de 40% à 60%, tandis que la zone centrale ZC possède un module d'élasticité faible (typiquement 3,5 à 5 GPa pour une résine UDMA non renforcée de fibres). Pour un tenon conique ou cylindro-conique, la section de la zone centrale ZC est constante, alors que la section de la zone périphérique ZP renforcée diminue dans la partie conique inférieure. Il en résulte que le rapport de la section de la zone périphérique ZP sur la section de la zone centrale ZC diminue le long du cône, de la partie coronaire à la partie apicale. Par exemple, un tenon 10 conique de forme Mooser de diamètre 2mm, ayant une zone centrale ZC sans fibres de diamètre 0,7 mm, possède un module d'élasticité de 40 à 45 de GPa sur sa partie cylindrique, et de 25 à 30 GPa à l'apex.

## Revendications

1. Tenon d'ancrage canalaire (10), réalisé en matériau composite comportant au moins une matrice organique (3), des particules (5) et des fibres (4) assemblées par une opération de pultrusion, et ayant une zone centrale (ZC) radio opaque s'étendant suivant l'axe longitudinal du tenon, et une zone périphérique (ZP) annulaire coaxiale à ladite zone centrale (ZC),
la zone périphérique possédante une radio opacité inférieure à celle de la zone centrale
**caractérisé en ce que** la proportion volumique en particules (5) est supérieure à la proportion volumique en fibres (4) dans ladite zone centrale (ZC), et **en ce que** la proportion volumique en particules (5) est inférieure à la proportion volumique en fibres (4) dans ladite zone périphérique (ZP).

2. Tenon selon la revendication 1, **caractérisé en ce que** les proportions volumiques respectives en particules (5) et en fibres (4) évoluent progressivement et radialement depuis l'axe longitudinal jusqu'à la périphérie dudit tenon (10).

3. Tenon selon la revendication 2, **caractérisé en ce que** la variation de la proportion volumique en particules (5) est opposée à celle de la proportion volumique en fibres (4).

4. Tenon selon l'une quelconque des revendications 1 à 3, **caractérisé en ce que** la somme des proportions volumiques respectives en particules (5) et en fibres (4) est constante radialement depuis l'axe longitudinal jusqu'à la périphérie dudit tenon (10).

5. Tenon selon l'une quelconque des revendications 1 à 4, **caractérisé en ce que** le matériau composite comporte au moins deux types de particules (5).

6. Tenon selon la revendication 5, **caractérisé en ce que** les deux types de particules (5) sont respectivement radio opaques et non radio opaques.

7. Tenon selon la revendication 6, **caractérisé en ce que** les proportions volumiques respectives des particules radio opaques et des particules non radio opaques évoluent progressivement et radialement depuis l'axe longitudinal jusqu'à la périphérie dudit tenon, leurs variations étant opposées.

8. Tenon selon l'une quelconque des revendications 1 à 7, **caractérisé en ce que** le matériau composite comporte au moins deux types de fibres (4).

9. Tenon selon la revendication 8, **caractérisé en ce que** les proportions volumiques respectives des deux types de fibres (4) évoluent progressivement et radialement depuis l'axe longitudinal jusqu'à la périphérie dudit tenon, leurs variations étant opposées.

10. Tenon selon la revendication 1, **caractérisé en ce que** la zone centrale (ZC) est dépourvue de fibres.

11. Tenon selon l'une quelconque des revendications 1 à 10, **caractérisé en ce que** la zone périphérique (ZP) possède une dureté supérieure à celle de la zone centrale. (ZC).

12. Tenon d'ancrage canalaire dentaire selon la revendication 11, **caractérisé en ce que** la zone centrale (ZC) tendre forme un guide de forage autodirecteur centré le long de l'axe du tenon (10).

13. Tenon d'ancrage canalaire dentaire selon l'une des revendications 1 à 12, **caractérisé en ce que** la section de la zone centrale (ZC) est constante, alors que celle de la zone périphérique (ZP) renforcée diminue dans la partie inférieure conique.

## Claims

1. A canal anchoring tenon (10) made of composite material comprising at least an organic matrix (3), particles (5) and fibers (4) assembled by a pultrusion operation and having a radiopaque central zone (ZC) extending along the longitudinal axis of the tenon and an annular peripheral zone (ZP) coaxial to said central zone (ZC), the peripheral zone having a lower radiopacity than that of the central zone,
**characterized in that** the volume proportion of particles (5) is greater than the volume proportion of fibers (4) in said central zone (ZC), and that the volume proportion of particles (5) is smaller than the volume proportion of fibers (4) in said peripheral zone (ZP).

2. The tenon according to claim 1, **characterized in that** the respective volume proportions of particles (5) and fibers (4) vary progressively and radially from the longitudinal axis to the periphery of said tenon (10).

3. The tenon according to claim 2, **characterized in that** the variation of the volume proportion of particles (5) is the opposite of that of the volume proportion of fibers (4).

4. The tenon according to any one of claims 1 to 3, **characterized in that** the sum of the respective volume proportions of particles (5) and fibers (4) is radially constant from the longitudinal axis to the periphery of said tenon (10).

5. The tenon according to any one of claims 1 to 4, **characterized in that** the composite material contains at least two types of particles (5).

6. The tenon according to claim 5, **characterized in that** the two types of particles (5) are respectively radiopaque and non-radiopaque.

7. The tenon according to claim 5, **characterized in that** the respective volume proportions of radiopaque particles and of non-radiopaque particles vary progressively and radially from the longitudinal axis to the periphery of said tenon, their variations being opposite.

8. The tenon according to any one of claims 1 to 7, **characterized in that** the composite material comprises at least two types of fibers (4).

9. The tenon according to claim 8, **characterized in that** the respective volume proportions of the two types of fibers (4) vary progressively and radially from the longitudinal axis to the periphery of said tenon, their variations being opposite.

10. the tenon according to claim 1, **characterized in that** the central zone (ZC) is devoid of fibers.

11. The tenon according to any one of claims 1 to 10, **characterized in that** the peripheral zone (ZP) has a greater hardness than that of the central zone (ZC).

12. A canal dental anchoring tenon according to claim 11, **characterized in that** the tender central zone (ZC) forms a self-directing drilling guide centred along the axis of the tenon (10).

13. The canal dental anchoring tenon according to one of claims 1 to 12, **characterized in that** the cross-secticn of the central zone (ZC) is constant whereas that of the reinforced peripheral zone (ZP) decreases in the conical bottom part.

## Patentansprüche

1. Wurzelkanal-Verankerungszapfen (10) aus Verbundmaterial, das mindestens eine organische Matrix (3), Partikel (5) und Fasern (4) umfasst, die durch einen Zieh-Strangpressvorgang verbunden wurden, mit einem zentralen Bereich (ZC), der röntgendicht ist und sich entlang der Längsachse des Zapfens erstreckt, und einem zum zentralen Bereich (ZC) koaxialen ringförmigen Umfangsbereich (ZP), wobei der Umfangsbereich eine geringere Röntgenundurchlässigkeit aufweist als der zentrale Bereich, **dadurch gekennzeichnet, dass** in dem zentralen Bereich (ZC) der Volumenanteil an Partikeln (5) größer ist als der Volumenanteil an Fasern (4), sowie dadurch, dass im Umfangsbereich (ZP) der Volumenanteil an Partikeln (5) kleiner ist als der Volumenanteil an Fasern (4).

2. Zapfen nach Anspruch 1, **dadurch gekennzeichnet, dass** sich die jeweiligen Volumenanteile an Partikeln (5) und an Fasern (4) allmählich und radial von der Längsachse zum Umfang des Zapfens (10) hin verändern.

3. Zapfen nach Anspruch 2, **dadurch gekennzeichnet, dass** die Veränderung des Volumenanteils an Partikeln (5) gegenläufig zu derjenigen des Volumenanteils an Fasern (4) ist.

4. Zapfen nach einem der Ansprüche 1 bis 3, **dadurch gekennzeichnet, dass** die Summe der jeweiligen Volumenanteile an Partikeln (5) und an Fasern (4) von der Längsachse zum Umfang des Zapfens (10) hin radial konstant ist.

5. Zapfen nach einem der Ansprüche 1 bis 4, **dadurch gekennzeichnet, dass** das Verbundmaterial mindestens zwei Arten von Partikeln (5) umfasst.

6. Zapfen nach Anspruch 5, **dadurch gekennzeichnet, dass** die beiden Arten von Partikeln (5) jeweils röntgendicht und röntgendurchlässig sind.

7. Zapfen nach Anspruch 6, **dadurch gekennzeichnet, dass** sich die jeweiligen Volumenanteile an röntgendichten und röntgendurchlässigen Partikeln allmählich und radial von der Längsachse zum Umfang des Zapfens hin verändern, wobei ihre Veränderungen gegenläufig sind.

8. Zapfen nach einem der Ansprüche 1 bis 7, **dadurch gekennzeichnet, dass** das Verbundmaterial mindestens zwei Arten von Fasern (4) umfasst.

9. Zapfen nach Anspruch 8, **dadurch gekennzeichnet, dass** sich die jeweiligen Volumenanteile der beiden Arten von Fasern (4) allmählich und radial von der Längsachse zum Umfang des Zapfens hin verändern, wobei ihre Veränderungen gegenläufig sind.

10. Zapfen nach Anspruch 1, **dadurch gekennzeichnet, dass** der zentrale Bereich (ZC) frei von Fasern ist.

11. Zapfen nach einem der Ansprüche 1 bis 10, **dadurch gekennzeichnet, dass** der Umfangsbereich (ZP) eine größere Härte als der zentrale Bereich (ZC) aufweist.

12. Zahnwurzelkanal-Verankerungszapfen nach Anspruch 11, **dadurch gekennzeichnet, dass** der weiche zentrale Bereich (ZC) eine selbstlenkende Bohrführung bildet, die entlang der Achse des Zapfens (10) zentriert ist.

13. Zahnwurzelkanal-Verankerungszapfen nach einem der Ansprüche 1 bis 12, **dadurch gekennzeichnet, dass** der Querschnitt des zentralen Bereichs (ZC) konstant ist, wohingegen derjenige des verstärkten Umfangsbereichs (ZP) im unteren konischen Teil kleiner wird.
